# EUROPEAN PATENT SPECIFICATION

(11) **EP 3 696 733 B1**
(45) Date of publication and mention of the grant of the patent: **27.03.2024**
(21) Application number: 19156887.2
(22) Date of filing: 13.02.2019
(51) Int. Cl.: G06N 3/04

(54) **ENCODING AND TRANSFERRING SCENE AND TASK DEPENDENT LEARNING INFORMATION INTO TRANSFERABLE NEURAL NETWORK LAYERS**
CODIERUNG UND ÜBERTRAGUNG VON SZENEN- UND AUFGABENABHÄNGIGEN LERNINFORMATIONEN IN ÜBERTRAGBARE NEURONALE NETZWERKSCHICHTEN
CODAGE ET TRANSFERT DES INFORMATIONS D'APPRENTISSAGE DÉPENDANTES DES SCÈNES ET DES TÂCHES DANS DES COUCHES DE RÉSEAUX NEURONAUX TRANSFÉRABLES

(43) Date of publication of application: 19.08.2020
(73) Proprietor: Siemens Aktiengesellschaft, 80333 München (DE)
(72) Inventor: CLAUSSEN, Heiko, North Brunswick, NJ 08902 (US); APARICIO OJEA, Juan L., Moraga, CA 94556 (US); SEHR, Martin, Albany, CA 94706 (US); SOLOWJOW, Eugen, Berkeley, CA 94709 (US); WEN, Chengtao, Redwood City, CA 94065 (US)
(74) Representative: Isarpatent

(56) References cited:
- CN-A- 107 977 706
- DEVIN COLINE ET AL: "Learning modular neural network policies for multi-task and multi-robot transfer", 2017 IEEE INTERNATIONAL CONFERENCE ON ROBOTICS AND AUTOMATION (ICRA), IEEE, 29 May 2017 (2017-05-29), pages 2169-2176, XP033126992, DOI: 10.1109/ICRA.2017.7989250 [retrieved on 2017-07-21]

## Description

### TECHNICAL FIELD

The present disclosure relates generally to methods, systems, and apparatuses related to encoding and transferring scene and task dependent learning information into transferable neural network layers. The disclosed techniques may be applied to, for example, to enhance logistics and task execution in factory settings.

### BACKGROUND

Recent advances in machine learning have sparked a plethora of research and practical development, leading to widespread application in various technical domains spanning from web portals to industrial automation. The latter domain in particular has proven both very promising and challenging in its adoption of novel learning algorithms, such as seen for instance in classification tasks for smart grasping of various objects with common physical hardware. While machine learning and Artificial Intelligence (AI) techniques in the broader sense bring the opportunity to revolutionize industrial automation - in particular with a view towards mass customization in manufacturing lines, as pushed by the prominent vision of Industry 4.0 - this domain also highlights shortcomings of current state-of-the-art learning algorithms to be addressed by experts to enable pervasive application. Being able to rapidly and reliably close the gap between potential and realization of AI techniques in industrial automation may well become one of the key distinguishing factors in the manufacturing automation market of the coming decades.

One aspect slowing down the adoption of current state-of-the-art learning algorithms is the transfer of learned policies and decision structures to different agents or even agents deployed to different environments. Our current invention addresses the latter issue of devices being exposed to a variety of distinct environments and associated tasks. In particular, if the number of possible environments and tasks is large, training a single algorithm to capture all possible scenarios the agent may be exposed to can become prohibitive. When using neural networks, for instance, the possible neuron connections increase exponentially as nodes are added to a given network. Computation time depends on the numbers of nodes and their connections; increases may have drastic consequences for processing times. This dimensionality problem is highlighted especially when learning algorithms run on embedded devices, as opposed to general computing PCs equipped with GPUs. At the same time, the industry is moving in the direction of edge automation with more intelligence close to the process. On these edge devices, the computational resources available are rather limited and there are several constrains in terms of memory, speed and footprint. Therefore, deploying big generic networks to AI-enabled edge devices is typically not feasible.
Devin Coline ET AL: "Learning modular neural network policies for multi-task and multi-robot transfer" describes an approach using transfer learning for transferring information from one skill to another and even from robot to another one. Neural network policies are decomposed into "task-specific" and "robot-specific" modules, where the task-specific modules are shared across robots, and the robot-specific modules are shared across all tasks on that robot.

### SUMMARY

Embodiments of the present invention address and overcome one or more of the above shortcomings and drawbacks, by providing methods, systems, and apparatuses related to encoding and transferring scene and task dependent learning information into transferable neural network layers.

The invention is defined by the independent claims.

Further aspects of the invention are outlined in the dependent claims.

### BRIEF DESCRIPTION OF THE DRAWINGS

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following Figures:
FIG. 1A shows a first example of how machine modules are transferred to a robot device, according to some embodiments;
FIG. 1B shows a second example of how machine modules are transferred to a robot device, according to some embodiments;
FIG. 1C shows a third example of how machine modules are transferred to a robot device, according to some embodiments;
FIG. 1D shows a fourth example of how machine modules are transferred to a robot device, according to some embodiments;
FIG. 2 shows how a single object can store multiple task-specific modules;
FIG. 3 illustrates an exemplary RFID (Radio Frequency Identifier) tag that may be used to store task-specific modules on objects, according to some embodiments; and
FIG. 4 illustrates an exemplary computing environment within which the task planning computer may be implemented.

### DETAILED DESCRIPTION

Systems, methods, and apparatuses are described herein which relate generally to encoding and transferring scene and task dependent learning information into transferable neural network layers. The techniques described herein are based on the understanding that, even when a robot is exposed to different environments and tasks, many relevant properties are device-specific and remain constant. In the following, we outline a technical solution enabling agents pre-trained with device-specific functionalities to inherit additional, modular extensions to their decision structures from the infrastructure they are exposed to, in conjunction with selected tasks to be executed by the respective agents. The solution described herein evolves around flexible modular architectures, where a neural network layer or group of layers can be associated to a specific task or a skill. Task specific layers can be stored on passive elements, while generic ones can be stored at mobile or active components.

With the techniques described herein, neural network policies are decomposed into "task-specific" and "machine-specific" modules, where the task-specific modules are shared across machines required to perform given tasks, and the machine-specific modules are shared across all tasks on identical machines. The task-specific and machine-specific modules described herein can be transmitted to: (1) learn how a specific task, such as picking an object, should be performed; (2) combine machine-specific modules for a better task performance. In this way, grasping task information can be shared between machines (e.g., 2 robot devices equipped with a camera focusing at different points of view).

The term "module," as used herein refers to an individual neural network layer or a group of neural network layers. For each module, the information that needs to be stored and exchanged is composed by the weights and the network shape, such as the numbers of nodes per layer. This information could be managed, for example, via Extensible Markup Language (XML) files or user-defined binary files. Alternatively, if the end user uses existing machine-learning software, the modules can be stored in its own I/O format for storing and loading a trained network. The important factor is that transmitter and receiver know in advance the format of the information to be shared in between devices and objects.

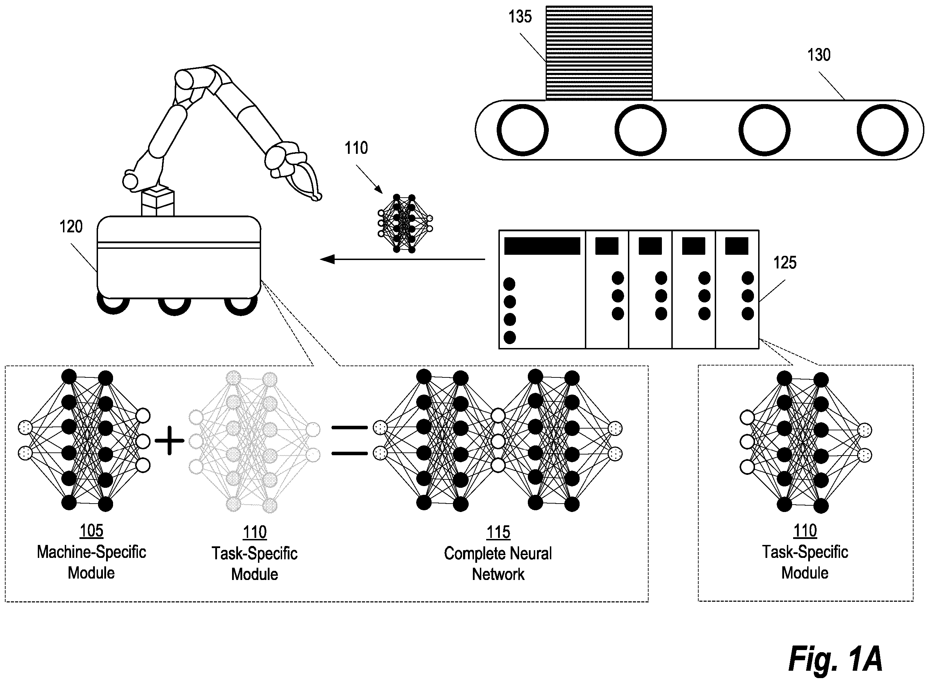

FIG. 1A shows a first example of how machine modules are transferred to a Robot Device 120, according to some embodiments. In this example, the Robot Device 120 is approaching a Conveyor Belt 130 controlled by Programmable Logic Controller (PLC) 125. The Robot Device 120 is tasked with grasping Box 135 on the Conveyor Belt 130. The Robot Device 120 has a non-transitory computer readable medium storing a Machine-Specific Module 105 that includes a first set of neural network layers, referred to herein as the "base" neural network layers. Those network layers are, for example, representing machine dependent information such as which type of camera is available on the robot (e.g., RGB, depth), which resolution, sensitivity to light, temperature etc., which gripper is available etc. The "base" neural network is thus extracting the best set of features and policies given the constraints of the machine. The PLC 125 transmits a Task-Specific Module 110 to the Robot Device 120. This transmission may be, for example, response to a request from the Robot Device 120. Alternatively, the Task-Specific Module 110 may be pushed to the Robot Device 120 when the Robot Device 120 is within a certain distance of the Box 135. The Task-Specific Module 110 comprises task-specific neural network layers enabling performance of a task (in this case, a grasping task). Task-specific information may implicitly encode any of the following alone or in combination where and how an object can be handled, for example, without damage (e.g., different information would be employed for eggs vs. heavy stone); which procedure to follow to successfully execute a task such as an assembly; what tools to use and how to handle them (e.g., considering a slippery object vs. deformable object); unforeseeable behavior of an object (e.g., hidden liquid or moving parts that can shift the center of gravity); etc. This information can be implicitly encoded in the task specific neural network.

Continuing with reference to FIG. 1A, the Robot Device 120 then collects one or more values from an operating environment that are required to perform the task. These values may be, for example, data collected by position, temperature, and/or image sensors. In some embodiments, the Robot Device 120 is pre-configured with knowledge of what values are required to perform particular tasks. In other embodiments, a description of these values may be provided as part of the Task-Specific Module 110. For example, in addition to the task-specific neural network layers, a list of required values may be provided by the PLC 125. The Robot Device 120 uses the values as input to a Complete Neural Network 115 comprising the base neural network layers and the task-specific neural network layers to generate an output value. The Robot Device 120 can then perform the task using the output value.

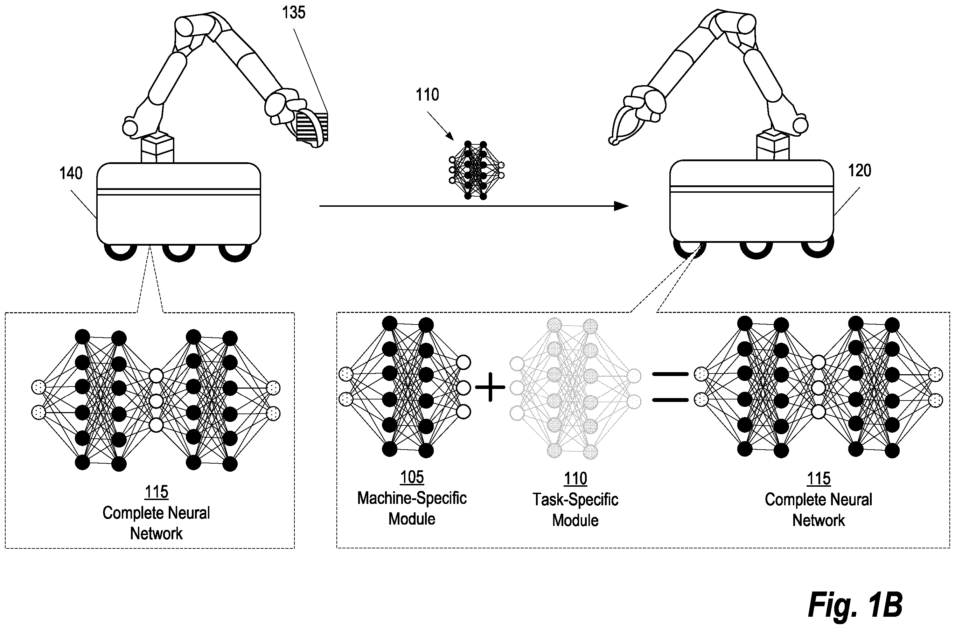

FIG. 1B shows a second example of how machine modules are transferred to a Robot Device 120, according to some embodiments. In this example Robot Device 140 is already grasping the Box 135. Additionally, the Robot Device 140 has a copy of the Complete Neural Network 115 including the Task-Specific Module 110. In this case, the Robot Device 140 can share the Task-Specific Module 110 with a second Robot Device 120 to teach the latter how to grasp the Box 135. In general any technique known in the art may be used for transferring information between Robot Device 140 and Robot Device 120. For example, in one embodiment, the two robot devices communicate via a wireless network (not shown in FIG. 1B).

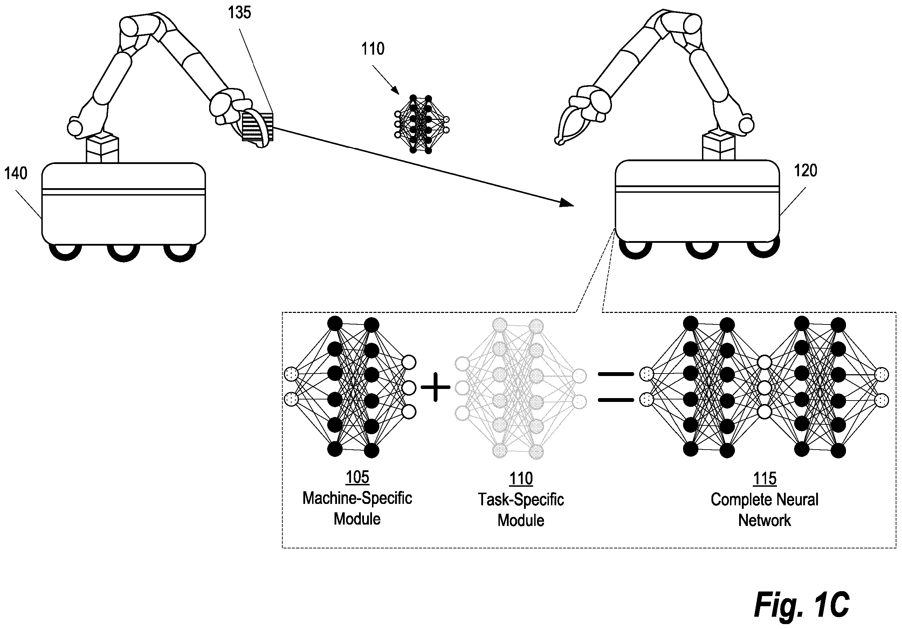

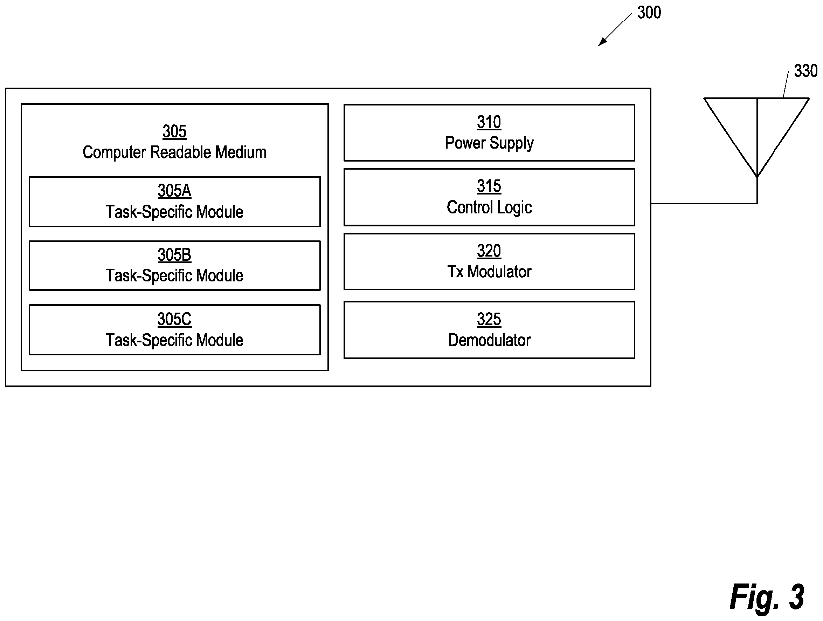

FIG. 1C shows a third example of how machine modules are transferred to a Robot Device 120, according to some embodiments. In this example, the Box 135 has a Radio Frequency Identifier (RFID) tag that includes the Task-Specific Module 110. The Robot Device 120 includes a RFID tag reader that is used to retrieve the Task-Specific Module 110 from the RFID tag. Techniques for retrieving information via RFID are generally known in the art; thus these techniques are not described in detail herein. One example of a RFID tag that may be used with the present invention is described below with reference to FIG. 3. It should be noted that the general concept described above can be extended to other similar storage and transmission mechanisms. For example, in one embodiment, the Task-Specific Module 110 is stored in a Bluetooth Smart Tag on the Box 135. The Robot Device 120 then retrieves the Task-Specific Module 110 via Bluetooth.

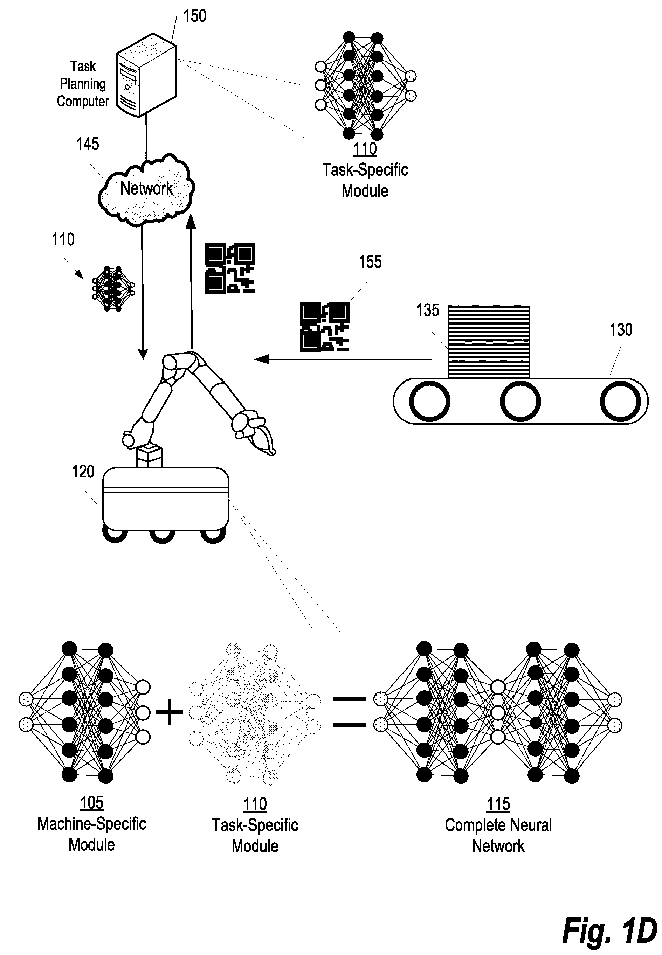

FIG. 1D shows a fourth example of how machine modules are transferred to a Robot Device 120, according to some embodiments. The Robot Device 120 reads an Identifier 155 off the Box 135. In the example of FIG. 1D, the Robot Device 120 uses an image scanner (not shown in FIG. 1D) to read a QR-code. However, in general any technique known in the art may be used for reading the Identifier 155. For example, in some embodiments, the Identifier 155 may be stored in a RFID tag or Bluetooth Smart Tag on the Box 135. The Robot Device 120 sends the Identifier 155 to a Task Planning Computer 150 over Network 145. This Network 145 may be, for example, a private intranet or the Internet. In response, the Task Planning Computer 150 sends the Task-Specific Module 110 to the Robot Device 120. Then, as with the other examples described above, the Robot Device 120 combines the Task-Specific Module 110 with a Machine-Specific Module 105 to form a Complete Neural Network 115 that can be used to complete a task involving the Box 135.

The exact task may be specified in the Identifier 155 itself. For example, a specific "grasping" identifier may be provided by the Box 135. Alternatively, the Identifier 155 may only identify the Box 135 itself, and the Robot Device 120 specifies the task it wishes to complete. For example, in addition to providing the Identifier 155 to the Task Planning Computer 150, the Robot Device 120 may also send a desired command (e.g., "grasp"). In either event, the information provided by the Robot Device 120 may be used directly as a way of identifying the Task-Specific Module 110 on a storage medium accessible to the Task Planning Computer 150. For example, in one embodiment, the Task Planning Computer 150 includes a database that is indexed based on an object identifier and/or task identifier.

In some embodiments, the Task Planning Computer 150 schedules tasks for execution on the Robot Device 120. For example, the Task Planning Computer 150 may assign a task that involves retrieving the Box 135 and transporting it to another location in the operating environment. In this case, instructions for the task are pushed to the Robot Device 120 so that it can execute accordingly. In addition to these instructions, the Task-Specific Module 110 and any other task-specific modules necessary to complete the assigned task can be pushed to the Robot Device 120. Thus, the Robot Device 120 will have this information readily available when needed.

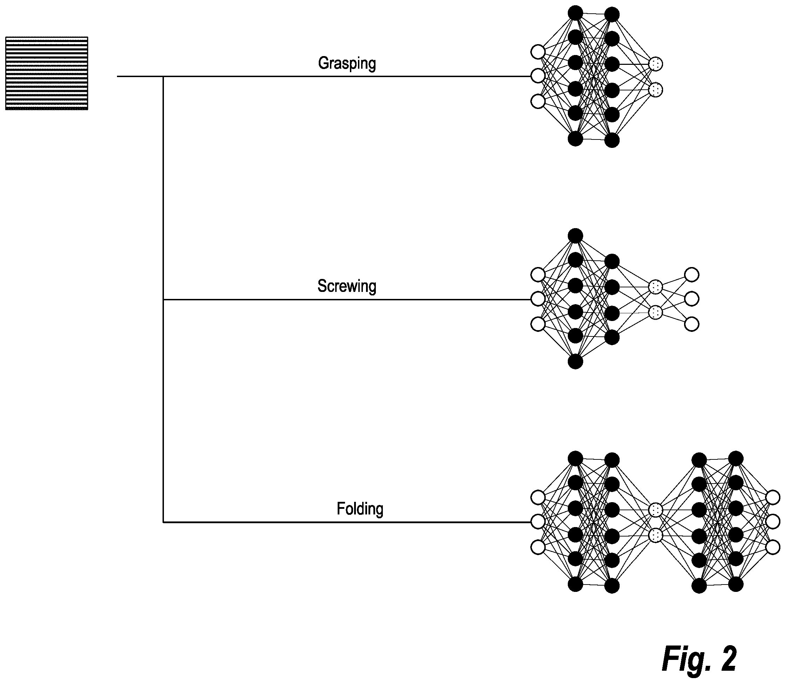

In some embodiments, task-specific 110 and machine-specific 105 modules can be mixed and matched to execute new tasks or collections of tasks and machine combinations or, in case of particularly difficult combinations, jump-start the learning process of a novel task from a good initialization. For instance, an object can store different task-specific modules depending on the collection of anticipated robot actions with respect to the object, as shown conceptually in FIG. 2. This modular decomposition of task- and machine-specific components thus helps to avoid creating general-purpose neural network structures of unmanageable sizes, without any guarantees on their performance. It is possible that some tasks can be decomposed into subtasks. It is up to the system implementation to decide which way to decompose a task and transmit. The provided combination can jump-start the learning process if another grasping task is required. By transfer learning and adapting the weights from the previous grasping task, a specialized network can emerge. Note that transfer learning requires significantly less resources then training a network from scratch as it assumes that only a small number of weights need to be retrained (generally in the fully connected layer at the output of the network). Therefore, such approach is especially applicable for low performant systems at the edge.

The techniques described herein are critical to enable AI applications on the edge. Machines can interact with their environment autonomously without the need to create general-purpose AI components, which has not proven successful in the past. Virtually all the success of AI applications in recent years has been in vertical applications that are domain specific. The modular approach of the present disclosure enables modular learning of autonomous systems, reducing both memory and computing requirements.

Moreover, in applications where training data is scarce, the disclosed modular approach facilitates the deployment of AI applications, making it easy to transfer any acquire knowledge by any agent. In particular, decomposition of learned policies in task- and machine-specific components enables training of smaller, manageable actions instead of universal robot feedback policies.

Furthermore, the techniques described herein can be conceptually understood as splitting the neural networks into a fixed and a flexible part. The fixed part is machine-specific, and may be deployed to inference-optimized parts of hardware accelerators. The flexible, task-specific parts of the neural network are used to train new classes and adapt current classifiers on the fly. These parts may be deployed to flexible parts of a hardware accelerator, such as SHAVE, GPU, or CPUs.

FIG. 3 illustrates an exemplary RFID Tag 300 that may be used to store task-specific modules on objects, according to some embodiments. This RFID Tag 300 is an active RFID tag that includes a Power Supply 310 (e.g., a battery); however it should be understood that passive RFID tags can be similarly used to implement the present invention. A Computer Readable Medium 305 stores Task-Specific Modules 305A, 305B, 305C. The Computer Readable Medium 305 is preferably comprised of a non-volatile storage medium such that it will retain its contents in the event of failure or replacement of the Power Supply 310. Demodulator 325 demodulates signals received via an Antenna Connection 330. These signals may include for example, a description of a particular task received from a robot device. The Control Logic 315 uses the demodulated signal to select one or more of the Task-Specific Modules 305A, 305B, 305C. Modulator 320 modulates an output signal generated by the Control Logic 315 (e.g., comprising one or more task-specific modules). The modulated signal is transmitted to a robot device or other receiver by driving the Antenna Connection 330.

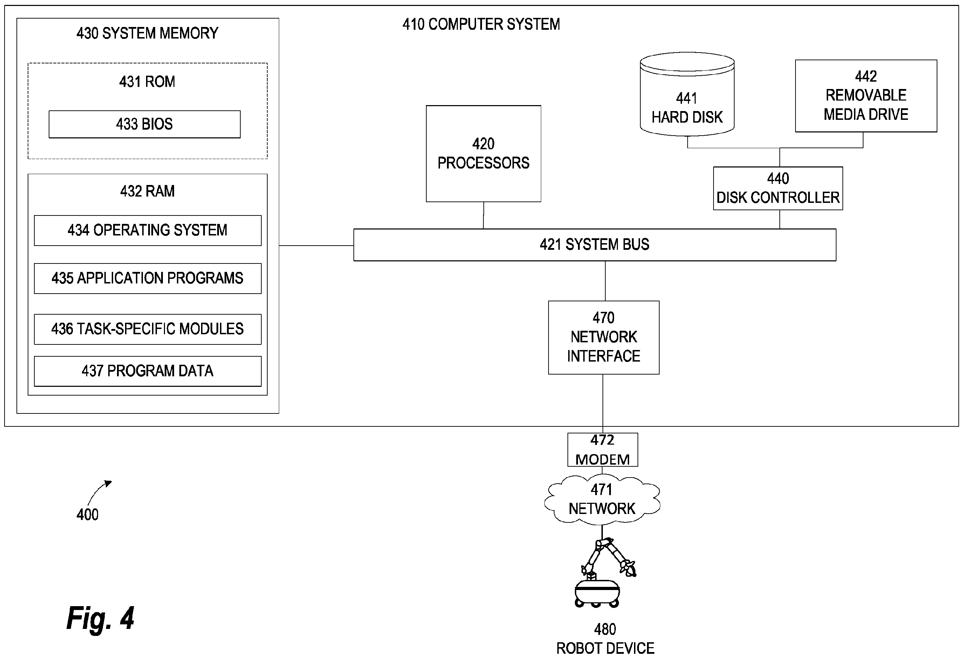

FIG. 4 illustrates an exemplary computing environment 400 within which the Task Planning Computer 150 (shown in FIG. 1D) may be implemented. The computing environment 400 includes computer system 410, which is one example of a computing system upon which embodiments of the invention may be implemented. Computers and computing environments, such as computer system 410 and computing environment 400, are known to those of skill in the art and thus are described briefly herein.

As shown in FIG. 4, the computer system 410 may include a communication mechanism such as a bus 421 or other communication mechanism for communicating information within the computer system 410. The computer system 410 further includes one or more processors 420 coupled with the bus 421 for processing the information. The processors 420 may include one or more central processing units (CPUs), graphical processing units (GPUs), or any other processor known in the art.

The computer system 410 also includes a system memory 430 coupled to the bus 421 for storing information and instructions to be executed by processors 420. The system memory 430 may include computer readable storage media in the form of volatile and/or nonvolatile memory, such as read only memory (ROM) 431 and/or random access memory (RAM) 432. The system memory RAM 432 may include other dynamic storage device(s) (e.g., dynamic RAM, static RAM, and synchronous DRAM). The system memory ROM 431 may include other static storage device(s) (e.g., programmable ROM, erasable PROM, and electrically erasable PROM). In addition, the system memory 430 may be used for storing temporary variables or other intermediate information during the execution of instructions by the processors 420. A basic input/output system (BIOS) 433 contains the basic routines that help to transfer information between elements within computer system 410, such as during start-up, may be stored in ROM 431. RAM 432 may contain data and/or program modules that are immediately accessible to and/or presently being operated on by the processors 420. System memory 430 may additionally include, for example, operating system 434, application programs 435, task-specific modules 436 and program data 437. The application programs 435 may include, for example, one or more executable applications that enable retrieval of one or more of the task-specific modules 436 in response to a request received from the Robot Device 480.

The computer system 410 also includes a disk controller 440 coupled to the bus 421 to control one or more storage devices for storing information and instructions, such as a hard disk 441 and a removable media drive 442 (e.g., compact disc drive, solid state drive, etc.). The storage devices may be added to the computer system 410 using an appropriate device interface (e.g., a small computer system interface (SCSI), integrated device electronics (IDE), Universal Serial Bus (USB), or FireWire).

The computer system 410 may perform a portion or all of the processing steps of embodiments of the invention in response to the processors 420 executing one or more sequences of one or more instructions contained in a memory, such as the system memory 430. Such instructions may be read into the system memory 430 from another computer readable medium, such as a hard disk 441 or a removable media drive 442. The hard disk 441 may contain one or more datastores and data files used by embodiments of the present invention. For example, in some embodiments, the hard disk 441 may be used to store task-specific modules as an alternative or supplement to the RAM 432. Datastore contents and data files may be encrypted to improve security. The processors 420 may also be employed in a multi-processing arrangement to execute the one or more sequences of instructions contained in system memory 430. In alternative embodiments, hard-wired circuitry may be used in place of or in combination with software instructions. Thus, embodiments are not limited to any specific combination of hardware circuitry and software.

As stated above, the computer system 410 may include at least one computer readable medium or memory for holding instructions programmed according to embodiments of the invention and for containing data structures, tables, records, or other data described herein. The term "computer readable medium" as used herein refers to any medium that participates in providing instructions to the processor 420 for execution. A computer readable medium may take many forms including, but not limited to, non-volatile media, volatile media, and transmission media. Non-limiting examples of non-volatile media include optical disks, solid state drives, magnetic disks, and magneto-optical disks, such as hard disk 441 or removable media drive 442. Non-limiting examples of volatile media include dynamic memory, such as system memory 430. Non-limiting examples of transmission media include coaxial cables, copper wire, and fiber optics, including the wires that make up the bus 421. Transmission media may also take the form of acoustic or light waves, such as those generated during radio wave and infrared data communications.

When used in a networking environment, computer system 410 may include modem 472 for establishing communications with a Robot Device 480 or other remote computing system over a network 471, such as the Internet. Modem 472 may be connected to bus 421 via user network interface 470, or via another appropriate mechanism. It should be noted that, although the Robot Device 480 is illustrated as being connected to the computer system 410 over the network 471 in the example presented in FIG. 4, in other embodiments of the present invention, the computer system 410 may be directly connected to the Robot Device 480. For example, in one embodiment the computer system 410 and the Robot Device 480 are co-located in the same room or in adjacent rooms, and the devices are connected using any transmission media generally known in the art.

Network 471 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 410 and other computers (e.g., Robot Device 480). The network 471 may be wired, wireless or a combination thereof. Wired connections may be implemented using Ethernet, Universal Serial Bus (USB), RJ-11 or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 471.

The general architecture of the computer system 410 may be used to implement the internal computing system of the Robot Device 480. In some embodiments, the various components of the computer system 410 described above can be used in a simplified form. For example, the Robot Device 480 may use a single processor and a relatively small amount of system memory 430. Additionally, components such as the hard disk 441 and removable media drive 442 may be omitted. Furthermore the Robot Device 480 may store additional data such as machine-specific modules to enable its performance of the techniques described herein.

The embodiments of the present disclosure may be implemented with any combination of hardware and software. In addition, the embodiments of the present disclosure may be included in an article of manufacture (e.g., one or more computer program products) having, for example, computer-readable, non-transitory media. The media has embodied therein, for instance, computer readable program code for providing and facilitating the mechanisms of the embodiments of the present disclosure. The article of manufacture can be included as part of a computer system or sold separately.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

Unless stated otherwise as apparent from the following discussion, it will be appreciated that terms such as "applying," "generating," "identifying," "determining," "processing," "computing," "selecting," or the like may refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices. Embodiments of the methods described herein may be implemented using computer software. If written in a programming language conforming to a recognized standard, sequences of instructions designed to implement the methods can be compiled for execution on a variety of hardware platforms and for interface to a variety of operating systems. In addition, embodiments of the present invention are not described with reference to any particular programming language. It will be appreciated that a variety of programming languages may be used to implement embodiments of the present invention.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

The functions and process steps herein may be performed automatically or wholly or partially in response to user command. An activity (including a step) performed automatically is performed in response to one or more executable instructions or device operation without user direct initiation of the activity.

The system and processes of the figures are not exclusive. Other systems, processes and menus may be derived in accordance with the principles of the invention to accomplish the same objectives. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof. No claim element herein is to be construed under the provisions of 35 U.S.C. 112(f) the element is expressly recited using the phrase "means for."

## Claims

1. A system comprising:
a robot device (120) comprising:
a non-transitory computer readable medium storing one or more machine-specific modules (105) comprising base neural network layers;
a robot controller configured to:
receive a task-specific module (110) comprising task-specific information corresponding to one or more task-specific neural network layers enabling performance of a task and a list of one or more required values from a real-world operating environment that are required to perform the task, wherein the task-specific information is implicitly encoded in the task-specific neural network layers,
collect the one or more required values from the real-world operating environment, using sensors;
use the required values as input to a neural network comprising the base neural network layers and the task-specific neural network layers to generate an output value; and
perform the task in the real-world operating environment based on the output value.

2. The system of claim 1, further comprising:
a task planning computer (150) configured to:
schedule the task for execution on the robot device (120), and
transmit the task-specific module (110) to the robot device (120).

3. The system of claim 1 or 2, wherein the task involves manipulation of an object and the task-specific module (110) is received from the object.

4. The system of claim 1 or 2, wherein the task involves manipulation of an object and the task-specific module (110) is received from a programmable logic controller (125) controlling a device holding the object wherein the device holding the object in particular is a conveyor belt (130).

5. The system of claim 1 or 2, wherein the task involves manipulation of an object and the robot controller is further configured to:
read an identifier (155) located on the object;
use the identifier (155) to request the task-specific module (110) from an external computer system.

6. The system of claim 1 or 2, wherein the task involves manipulation of an object and the task-specific module (110) is received from a second robot device (120).

7. The system of any one of the preceding claims wherein the task-specific information corresponding to one or more task-specific neural network layers comprises (i) a plurality of neural network weight values and (ii) one or more characteristics describing a shape of the task-specific neural network layers, wherein the characteristics describing a shape of the task-specific neural network layers in particular comprise a description of a neural network architecture structuring the task-specific neural network layers.

8. The system of any one of the preceding claims, wherein the task-specific information corresponding to one or more task-specific neural network layers is encoded in Extensible Markup Language (XML), and/or wherein the robot device comprises an artificial intelligence (AI) accelerator for executing the neural network.

9. A system comprising:
an object comprising:
a non-transitory computer readable medium storing plurality of task-specific modules (110), wherein each task-specific module (110) comprises task-specific information corresponding to task-specific neural network layers enabling performance of a task involving the object wherein the task-specific information is implicitly encoded in task-specific neural network layers;
a networking component configured to transmit one or more of the task-specific modules (110) to a robot device (120) according to claim 1 upon request and a list of one or more required values from a real-world operating environment that are required for performing the task in the real-world operating environment,
wherein the robot device (120) combines the transmitted task-specific modules (110) with a machine-specific module (105) to form a complete neural network for performing assigned tasks involving the object.

10. The system of claim 9, wherein the transmitted task-specific modules (110) correspond to instructions for grasping the object.

11. The system of claim 9 or 10, wherein the task-specific information corresponding to one or more task-specific neural network layers comprise (i) a plurality of neural network weight values and (ii) one or more characteristics describing a shape of the task-specific neural network layers wherein the characteristics describing a shape of the task-specific neural network layers in particular comprise a description of how many nodes are included on each of the task-specific neural network layers.

12. The system of any one of claims 9 to 11, wherein the task-specific information corresponding to one or more task-specific neural network layers is encoded in Extensible Markup Language (XML).

13. A method comprising:
storing, by a robot device (120), one or more machine-specific modules (105) comprising base neural network layers;
receiving, by the robot device (120), a task-specific module (110) comprising task-specific information corresponding to one or more task-specific neural network layers enabling performance of a task and a list of one or more required values from a real-world m operating environment that are required to perform the task, wherein task-specific information is implicitly encoded in the task-specific neural network layers;
collecting, by the robot device (120),the one or more required values from the real-world operating environment, using sensors;
using, by the robot device (120), the required values as input to a neural network comprising the base neural network layers and the task-specific neural network layers to generate an output value; and
performing, by the robot device (120), the task based on the output value.

14. The method of claim 13, wherein the task involves manipulation of an object and the task-specific module (110) is received from a programmable logic controller controlling (125) a device, or from a second robot device (120).

15. The method of claim 13, wherein the task involves manipulation of an object and the method further comprises:
reading an identifier located on the object;
using the identifier to request the task-specific module (110) from an external computer system.

## Patentansprüche

1. System, umfassend:
eine Robotervorrichtung (120), umfassend:
ein nichtflüchtiges computerlesbares Medium, das ein oder mehrere maschinenspezifische Module (105) speichert, die grundlegende neuronale Netzwerkschichten umfassen;
eine Robotersteuerung, die zu Folgendem konfiguriert ist:
Empfangen eines aufgabenspezifischen Moduls (110), das aufgabenspezifische Informationen umfasst, die einer oder mehreren aufgabenspezifischen neuronalen Netzwerkschichten entsprechen, die eine Durchführung einer Aufgabe ermöglichen, und einer Liste eines oder mehrerer erforderlicher Werte aus einer realen Betriebsumgebung, die erforderlich sind, um die Aufgabe durchzuführen, wobei die aufgabenspezifischen Informationen implizit in den aufgabenspezifischen neuronalen Netzwerkschichten codiert sind, Erfassen des einen oder der mehreren erforderlichen Werte aus der realen Betriebsumgebung unter Verwendung von Sensoren;
Verwenden der erforderlichen Werte als Eingabe in ein neuronales Netzwerk, das die grundlegenden neuronalen Netzwerkschichten und die aufgabenspezifischen neuronalen Netzwerkschichten umfasst, um einen Ausgabewert zu erzeugen; und
Durchführen der Aufgabe in der realen Betriebsumgebung basierend auf dem Ausgabewert.

2. System nach Anspruch 1, das ferner Folgendes umfasst:
einen Aufgabenplanungscomputer (150), der zu Folgendem konfiguriert ist:
zeitliches Planen der Aufgabe zur Ausführung auf der Robotervorrichtung (120), und
Übertragen des aufgabenspezifischen Moduls (110) an die Robotervorrichtung (120).

3. System nach Anspruch 1 oder 2, wobei die Aufgabe eine Manipulation eines Objekts involviert und das aufgabenspezifische Modul (110) von dem Objekt empfangen wird.

4. System nach Anspruch 1 oder 2, wobei die Aufgabe eine Manipulation eines Objekts involviert und das aufgabenspezifische Modul (110) von einer programmierbaren Logiksteuerung (125) empfangen wird, die eine Vorrichtung steuert, die das Objekt hält, wobei die das Objekt haltende Vorrichtung insbesondere ein Förderband (130) ist.

5. System nach Anspruch 1 oder 2, wobei die Aufgabe eine Manipulation eines Objekts involviert und die Robotersteuerung ferner zu Folgendem konfiguriert ist:
Auslesen einer Kennung (155), die sich auf dem Objekt befindet;
Verwenden der Kennung (155) zum Anfordern des aufgabenspezifischen Moduls (110) von einem externen Computersystem.

6. System nach Anspruch 1 oder 2, wobei die Aufgabe eine Manipulation eines Objekts involviert und das aufgabenspezifische Modul (110) von einer zweiten Robotervorrichtung (120) empfangen wird.

7. System nach einem der vorhergehenden Ansprüche, wobei die aufgabenspezifischen Informationen, die einer oder mehreren aufgabenspezifischen neuronalen Netzwerkschichten entsprechen, (i) eine Mehrzahl von neuronalen Netzwerkgewichtungswerten und (ii) eine oder mehrere Charakteristika umfassen, die eine Form der aufgabenspezifischen neuronalen Netzwerkschichten beschreiben, wobei die Charakteristika, die eine Form der aufgabenspezifischen neuronalen Netzwerkschichten beschreiben, insbesondere eine Beschreibung einer neuronalen Netzwerkarchitektur umfassen, die die aufgabenspezifischen neuronalen Netzwerkschichten strukturiert.

8. System nach einem der vorhergehenden Ansprüche, wobei die aufgabenspezifischen Informationen, die einer oder mehreren aufgabenspezifischen neuronalen Netzwerkschichten entsprechen, in erweiterbarer Auszeichnungssprache (XML) codiert sind, und/oder wobei die Robotervorrichtung einen Künstliche-Intelligenz(KI)-Beschleuniger zum Ausführen des neuronalen Netzwerks umfasst.

9. System, umfassend:
ein Objekt, umfassend:
ein nichtflüchtiges computerlesbares Medium, das eine Mehrzahl von aufgabenspezifischen Modulen (110) speichert, wobei jedes aufgabenspezifische Modul (110) aufgabenspezifische Informationen umfasst, die aufgabenspezifischen neuronalen Netzwerkschichten entsprechen, die eine Durchführen einer Aufgabe ermöglichen, die das Objekt involviert, wobei die aufgabenspezifischen Informationen implizit in aufgabenspezifischen neuronalen Netzwerkschichten codiert sind;
eine Vernetzungskomponente, die dazu konfiguriert ist, eines oder mehrere der aufgabenspezifischen Module (110) an eine Robotervorrichtung (120) nach Anspruch 1 auf Anforderung und eine Liste eines oder mehrerer erforderlicher Werte aus einer realen Betriebsumgebung, die zum Durchführen der Aufgabe in der realen Betriebsumgebung erforderlich sind, zu übertragen, wobei die Robotervorrichtung (120) die übertragenen aufgabenspezifischen Module (110) mit einem maschinenspezifischen Modul (105) kombiniert, um ein vollständiges neuronales Netzwerk zum Durchführen zugewiesener Aufgaben, die das Objekt involvieren, zu bilden.

10. System nach Anspruch 9, wobei die übertragenen aufgabenspezifischen Module (110) Anweisungen zum Greifen des Objekts entsprechen.

11. System nach Anspruch 9 oder 10, wobei die aufgabenspezifischen Informationen, die einer oder mehreren aufgabenspezifischen neuronalen Netzwerkschichten entsprechen, (i) eine Mehrzahl von neuronalen Netzwerkgewichtungswerten und (ii) eine oder mehrere Charakteristika umfassen, die eine Form der aufgabenspezifischen neuronalen Netzwerkschichten beschreiben, wobei die Charakteristika, die eine Form der aufgabenspezifischen neuronalen Netzwerkschichten beschreiben, insbesondere eine Beschreibung davon umfassen, wie viele Knoten auf jeder der aufgabenspezifischen neuronalen Netzwerkschichten enthalten sind.

12. System nach einem der Ansprüche 9 bis 11, wobei die aufgabenspezifischen Informationen, die einer oder mehreren aufgabenspezifischen neuronalen Netzwerkschichten entsprechen, in erweiterbarer Auszeichnungssprache (XML) codiert sind.

13. Verfahren, umfassend:
Speichern, durch eine Robotervorrichtung (120), eines oder mehrerer maschinenspezifischer Module (105), die grundlegende neuronale Netzwerkschichten umfassen;
Empfangen, durch die Robotervorrichtung (120), eines aufgabenspezifischen Moduls (110), das aufgabenspezifische Informationen umfasst, die einer oder mehreren aufgabenspezifischen neuronalen Netzwerkschichten entsprechen, die eine Durchführung einer Aufgabe ermöglichen, und einer Liste eines oder mehrerer erforderlicher Werte aus einer realen Betriebsumgebung, die erforderlich sind, um die Aufgabe durchzuführen, wobei aufgabenspezifische Informationen implizit in den aufgabenspezifischen neuronalen Netzwerkschichten codiert sind;
Erfassen, durch die Robotervorrichtung (120), des einen oder der mehreren erforderlichen Werte aus der realen Betriebsumgebung unter Verwendung von Sensoren;
Verwenden, durch die Robotervorrichtung (120), der erforderlichen Werte als Eingabe in ein neuronales Netzwerk, das die grundlegenden neuronalen Netzwerkschichten und die aufgabenspezifischen neuronalen Netzwerkschichten umfasst, um einen Ausgabewert zu erzeugen; und
Durchführen, durch die Robotervorrichtung (120), der Aufgabe basierend auf dem Ausgabewert.

14. Verfahren nach Anspruch 13, wobei die Aufgabe eine Manipulation eines Objekts involviert und das aufgabenspezifische Modul (110) von einer programmierbaren Logiksteuerung, die eine Vorrichtung steuert (125), oder von einer zweiten Robotervorrichtung (120) empfangen wird.

15. Verfahren nach Anspruch 13, wobei die Aufgabe eine Manipulation eines Objekts involviert und das Verfahren ferner Folgendes umfasst:
Auslesen einer Kennung, die sich auf dem Objekt befindet;
Verwenden der Kennung zum Anfordern des aufgabenspezifischen Moduls (110) von einem externen Computersystem.

## Revendications

1. Système, comprenant :
un dispositif robot (120) comprenant :
un support non transitoire lisible par ordinateur stockant un ou plusieurs modules spécifiques à une machine (105) comprenant des couches de réseau neuronal de base ;
un contrôleur de robot configuré pour :
recevoir un module spécifique à une tâche (110) comprenant des informations spécifiques à une tâche correspondant à une ou plusieurs couches de réseau neuronal spécifiques à une tâche permettant la réalisation d'une tâche et une liste d'une ou de plusieurs valeurs nécessaires provenant d'un environnement d'exploitation du monde réel qui sont nécessaires à la réalisation de la tâche, les informations spécifiques à une tâche étant codées implicitement dans les couches de réseau neuronal spécifiques à une tâche, collecter les une ou plusieurs valeurs nécessaires auprès de l'environnement d'exploitation du monde réel, à l'aide de capteurs ;
utiliser les valeurs nécessaires comme entrée d'un réseau neuronal comprenant les couches de réseau neuronal de base et les couches de réseau neuronal spécifiques à une tâche pour générer une valeur de sortie ; et
réaliser la tâche dans l'environnement d'exploitation du monde réel sur la base de la valeur de sortie.

2. Système selon la revendication 1, comprenant en outre :
un ordinateur de planification de tâches (150) configuré pour :
ordonnancer la tâche pour son exécution sur le dispositif robot (120), et
transmettre le module spécifique à une tâche (110) au dispositif robot (120).

3. Système selon la revendication 1 ou 2, dans lequel la tâche implique la manipulation d'un objet et le module spécifique à une tâche (110) est reçu depuis l'objet.

4. Système selon la revendication 1 ou 2, dans lequel la tâche implique la manipulation d'un objet et le module spécifique à une tâche (110) est reçu depuis un contrôleur logique programmable (125) qui commande un dispositif portant l'objet, le dispositif portant l'objet étant plus particulièrement une bande transporteuse (130).

5. Système selon la revendication 1 ou 2, dans lequel la tâche implique la manipulation d'un objet et le contrôleur de robot est configuré en outre pour :
lire un identifiant (155) situé sur l'objet ;
utiliser l'identifiant (155) pour demander le module spécifique à une tâche (110) auprès d'un système informatique externe.

6. Système selon la revendication 1 ou 2, dans lequel la tâche implique la manipulation d'un objet et le module spécifique à une tâche (110) est reçu depuis un deuxième dispositif robot (120) .

7. Système selon l'une quelconque des revendications précédentes, dans lequel les informations spécifiques à une tâche correspondant à une ou plusieurs couches de réseau neuronal spécifiques à une tâche comprennent (i) une pluralité de valeurs de poids de réseau neuronal et (ii) une ou plusieurs caractéristiques décrivant une forme des couches de réseau neuronal spécifiques à une tâche, les caractéristiques décrivant une forme des couches de réseau neuronal spécifiques à une tâche comprenant plus particulièrement une description d'une architecture de réseau neuronal structurant les couches de réseau neuronal spécifiques à une tâche.

8. Système selon l'une quelconque des revendications précédentes, dans lequel les informations spécifiques à une tâche correspondant à une ou plusieurs couches de réseau neuronal spécifiques à une tâche sont codées en langage de balisage extensible (XML), et/ou dans lequel le dispositif robot comprend un accélérateur d'intelligence artificielle (AI) pour l'exécution du réseau neuronal.

9. Système, comprenant :
un objet comprenant :
un support non transitoire lisible par ordinateur stockant une pluralité de modules spécifiques à une tâche (110), chaque module spécifique à une tâche (110) comprenant des informations spécifiques à une tâche correspondant à des couches de réseau neuronal spécifiques à une tâche permettant la réalisation d'une tâche impliquant l'objet, les informations spécifiques à une tâche étant codées implicitement dans des couches de réseau neuronal spécifiques à une tâche ;
un composant de réseautage configuré pour transmettre, sur demande, un ou plusieurs des modules spécifique à une tâche (110) à un dispositif robot (120) selon la revendication 1 et une liste d'une ou de plusieurs valeurs nécessaires provenant d'un environnement d'exploitation du monde réel qui sont nécessaires à la réalisation de la tâche dans l'environnement d'exploitation du monde réel, le dispositif robot (120) combinant les modules spécifiques à une tâche (110) transmis avec un module spécifique à une machine (105) pour former un réseau neuronal complet pour la réalisation de tâches assignées impliquant l'objet.

10. Système selon la revendication 9, dans lequel les modules spécifiques à une tâche (110) transmis correspondent à des instructions de préhension de l'objet.

11. Système selon la revendication 9 ou 10, dans lequel les informations spécifiques à une tâche correspondant à une ou plusieurs couches de réseau neuronal spécifiques à une tâche comprennent (i) une pluralité de valeurs de poids de réseau neuronal et (ii) une ou plusieurs caractéristiques décrivant une forme des couches de réseau neuronal spécifiques à une tâche, les caractéristiques décrivant une forme des couches de réseau neuronal spécifiques à une tâche comprenant plus particulièrement une description du nombre de nœuds contenus dans chacune des couches de réseau neuronal spécifiques à une tâche.

12. Système selon l'une quelconque des revendications 9 à 11, dans lequel les informations spécifiques à une tâche correspondant à une ou plusieurs couches de réseau neuronal spécifiques à une tâche sont codées en langage de balisage extensible (XML).

13. Procédé, comprenant :
le stockage, par un dispositif robot (120), d'un ou de plusieurs modules spécifiques à une machine (105) comprenant des couches de réseau neuronal de base ;
la réception, par le dispositif robot (120), d'un module spécifique à une tâche (110) comprenant des informations spécifiques à une tâche correspondant à une ou plusieurs couches de réseau neuronal spécifiques à une tâche permettant la réalisation d'une tâche et d'une liste d'une ou de plusieurs valeurs nécessaires provenant d'un environnement d'exploitation du monde réel qui sont nécessaires à la réalisation de la tâche, les informations spécifiques à une tâche étant codées implicitement dans les couches de réseau neuronal spécifiques à une tâche ;
la collecte, par le dispositif robot (120), des une ou plusieurs valeurs nécessaires auprès de l'environnement d'exploitation du monde réel, à l'aide de capteurs ;
l'utilisation, par le dispositif robot (120), des valeurs nécessaires comme entrée d'un réseau neuronal comprenant les couches de réseau neuronal de base et les couches de réseau neuronal spécifiques à une tâche pour générer une valeur de sortie ; et
la réalisation, par le dispositif robot (120), de la tâche sur la base de la valeur de sortie.

14. Procédé selon la revendication 13, dans lequel la tâche implique la manipulation d'un objet et le module spécifique à une tâche (110) est reçu depuis un contrôleur logique programmable (125) qui commande un dispositif ou depuis un deuxième dispositif robot (120).

15. Procédé selon la revendication 13, dans lequel la tâche implique la manipulation d'un objet, et le procédé comprenant en outre :
la lecture d'un identifiant situé sur l'objet ;
l'utilisation de l'identifiant pour demander le module spécifique à une tâche (110) auprès d'un système informatique externe.
